# EUROPÄISCHE PATENTANMELDUNG

(11) **EP 0 843 188 A2**
(43) Veröffentlichungstag der Anmeldung: **20.05.1998**
(21) Anmeldenummer: 97119486.5
(22) Anmeldetag: 07.11.1997
(51) Int. Cl.: G02B 7/04, G03B 19/18, G03B 13/36

(54) **Filmkamera**

(30) Priorität: 19.11.1996 DE 29619919 U; 02.12.1996 DE 29620789 U; 04.02.1997 DE 29701668 U
(71) Anmelder: Neudert, Walter, 82402 Seeshaupt (DE)
(72) Erfinder: Neudert, Walter, 82402 Seeshaupt (DE)

(57) **Zusammenfassung**

Die Erfindung betritt eine Filmkamera mit einem Objektiv, welches zur Einstellung der Schärfe bzw. der Brennweite einen Schärfering bzw. einen Zoomring aufweist, bei welcher ferner ein Entfernungsmesser vorgesehen ist. Der Schärfering (3) und der Zoomring (4) ist mit je einem Servomotor (6, 7) gekoppelt, wobei für die Servomotoren (6, 7) eine Steuerung (8) vorgesehen ist. Der Entfernungsmesser (5) ist derart ausgebildet, daß er der gemessenen Entfernung zu einem Motiv (10) entsprechende Daten erzeugt, welche in der Steuerung (8) zur entsprechenden Betätigung der Servomotoren (6, 7) verarbeitet werden, derart, daß die optimale Schärfe bei einem sich bewegenden Motiv (10) aufrechterhalten bleibt. Bevorzugt ist der Entfernungsmesser (5) als als Infrarotentfernungsmesser (9), Laser-Entfernungsmesser (9a) oder Rader-Entfernungsmesser (9b) ausgebildet.

## Beschreibung

Die Erfindung betrifft eine Filmkamera mit einem Objektiv, welches zur Einstellung der Schärfe bzw. Brennweite einen Schärfering bzw. Zoomring aufweist, bei welcher ferner ein Entfernungsmesser vorgesehen ist.

Derartige Filmkameras sind allgemein bekannt und werden im professionellen Bereich zur Aufzeichnung von Spielfilmen, Sport- und Lehrfilmen sowie Werbefilmen allgemein in den verschiedenen Filmgrößen verwendet.

Bei bekannten Filmkameras stellt sich bei der praktischen Arbeit das erhebliche Problem, daß Schärfe und Brennweite üblicherweise durch einen Kameraassistenten nachgeführt werden müssen, wenn der Kameramann die Einstellung verändert. So hat man praktisch bei Spielfilmen bestimmte Szenen vorher mit dem Bandmaß auszumessen und mehrere Schärfepunkte festzulegen, damit der Kameraassistent entsprechend dem Erreichen dieser Punkte die Schärfe nachziehen kann. Bei Sportaufnahmen ist ein derartiges Vorgehen nicht mehr möglich, so daß hier die optimale Schärfe lediglich durch das Okkular festgestellt werden kann und der Kameraassistent entsprechend den Anweisungen des Kameramanns die Schärfe nachstellen muß. Insbesondere bei Sportlehrfilmen und anderen professionell hergestellten Filmen ergibt sich bei der Verwendung extremer Zeitlupen mittels sogenannter Highspeed-Kameras noch das zusätzliche Problem, daß hierbei der Film wegen der hohen Geschwindigkeit von der Filmbahn abheben kann, so daß die Schärfe nicht mehr über das Okkular festgestellt werden kann, sondern die Nachstellung durch Gefühl und Erfahrung festgelegt werden muß.

Im nicht-professionellen Bereich sind Filmkameras mit automatischer Schärfeneinstellung bekannt, bei denen jedoch das Problem auftritt, wenn während eines Schwenks ein näherliegendes Motiv, beispielsweise ein Ast oder ein Baum, erfaßt wird, dann die automatische Schärfeneinstellung auf dieses Objekt scharfstellt und das eigentliche Hauptmotiv unscharf wird.

Der Erfindung liegt die Aufgabe zugrunde, eine Filmkamera der eingangs genannten Art zu schaffen, bei welcher gewährleistet ist, daß selbsttätig das zu filmende Motiv, insbesondere das sich bewegende Motiv, mit optimaler Schärfe abgebildet wird.

Diese Aufgabe wird bei einer Filmkamera der eingangs genannten Art im wesentlichen dadurch gelöst, daß der Schärfering und der Zoomring mit je einem Servomotor gekoppelt ist, daß für die Servomotoren eine Steuerung vorgesehen ist, und daß der Entfernungsmesser derart ausgebildet ist, daß er gemessene Entfernung zu einem Motiv entsprechende Daten erzeugt, welche in der Steuerung zur entsprechenden Betätigung der Servomotoren verarbeitet werden, derart, daß eine optimale Schärfe bei einem sich bewegenden Motiv aufrechterhalten bleibt.

Durch die Erfindung wird daher die genannte Aufgabe vollständig gelöst, indem durch die entsprechende Software der Steuerung das sich bewegende Motiv ständig im optimalen Schärfebereich gehalten wird.

Bei einer praktischen Ausführungsform nach der Erfindung ist der Entfernungsmesser bevorzugt als Infrarotentfernungsmesser ausgebildet.

Alternativ hierzu besteht eine weitere praktische Ausführungsform nach der Erfindung darin, daß der Entfernungsmesser als Laserentfernungsmesser ausgebildet ist.

Bei einer besonders bevorzugten Ausführungsform nach der Erfindung ist hierbei der Entfernungsmesser als Servo-Theodolit ausgebildet und am Motiv sind ein oder mehrere Reflektoren und/oder Sender angeordnet.

Derartige Servo-Theodoliten sind an sich aus dem Gebiet der Landvermessung bekannt. Die Kopplung eines derartigen Servo-Theodoliten als Infrarotentfernungsmesser mit einer Filmkamera bietet den überraschenden Vorteil, daß stets ein absolut sicheres und positives Entfernungssignal von dem sich bewegenden Motiv erhalten wird, welches von kurzfristigen Abdeckungen durch zwischen dem Motiv und der Filmkamera vorhandenen Hindernissen, wie beispielsweise Bäumen od. dgl., unbeeinflußt ist. Die zur Zeit erhältlichen Theodoliten, beispielsweise der Servo-Theodolit der Firma Topcon, USA, führen etwa 1.200 Messungen pro Sekunde durch und geben etwa drei bis vier mal pro Sekunde ein die Entfernung wiedergebendes Signal ab, welches in der Steuerung verarbeitbar ist. Hierdurch ist ein vollständig selbsttätiges Verfolgen des Motivs hinsichtlich der einzuhaltenden Schärfe gewährleistet, da das erhaltene Signal ausschließlich von der Entfernung des Reflektors oder Senders am Motiv abhängt. Irgendwelche nicht beabsichtigten Objekte werden nicht angemessen, da hier kein Reflektor oder Sender das durch den Theodoliten ausgestrahlte Signal reflektiert bzw. kein verarbeitbares Signal sendet. Derartige Reflektoren und/oder Sender lassen sich im Spielfilmsektor beispielsweise völlig unauffällig in etwa Daumennagelgröße herstellen und werden von dem betreffenden Darsteller getragen, so daß ein aufwendiges Ausmessen der zu filmenden Szene entfallen kann. Für die mit Highspeed-Kameras verbundenen Probleme läßt sich in der Steuerung zusätzlich ein Korrekturwert abspeichern, welcher bei der Verarbeitung und Erzeugung des die Schärfeneinstellung bewirkenden Signals berücksichtigt wird und welcher das Abheben des Films von der Filmbahn berücksichtigt.

Als Laserentfernungsmesser ist ein Entfernungsmesser besonders geeignet, welcher einen gepulsten Laser der Klasse 1 enthält.

Bei einer besonders bevorzugten weiteren Alternative ist der Entfernungsmesser als Radar-Entfernungsmesser ausgebildet.

Durch diese Ausführungsform wird daher die genannte Aufgabe ebenfalls vollständig gelöst, indem durch die entsprechende Software der Steuerung auch hier das sich bewegende Motiv ständig im optimalen Schärfebereich gehalten wird.

Im einzelnen ist es bevorzugt, daß der Radar-Entfernungsmesser als Millimeterwellen-Radar ausgebildet ist.

Bei einer besonders bevorzugten Ausführungsform nach der Erfindung ist der Radarentfernungsmesser als Frequenzmoduliertes-Continuous-Wave-Radar ausgebildet.

In bestimmten Fällen kann es vorteilhaft sein, am Motiv ein oder mehrere Reflektoren und/oder Sender anzuordnen.

Derartige Frequenzmodulierte-Continuous-Wave-Radars, kurz FMCW-Radar genannt sind an sich aus dem Gebiet der Kraftfahrzeugtechnik bekannt. Die Kopplung eines derartigen FMCW-Radars als Radarentfernungsmesser mit einer Filmkamera bietet den überraschenden Vorteil, daß stets ein absolut sicheres und positives Entfernungssignal von dem sich bewegenden Motiv erhalten wird, welches von kurzfristigen Abdeckungen durch zwischen dem Motiv und der Filmkamera vorhandenen Hindernissen, wie beispielsweise Bäumen oder dgl., unbeeinflußt ist. Die zur Zeit entwickelten FMCW-Radars führen etwa eine Messung pro 20 Millisekunden durch und geben dabei ein entsprechendes, die Entfernung wiedergebendes Signal ab, welches in der Steuerung verarbeitbar ist. Da FMCW-Radars die Inhomogenität des abgetasteten Raumes messen, ist es nicht unbedingt erforderlich, das Hauptmotiv mit einem Reflektor auszustatten. Unter besonders schwierigen Aufnahmebedingungen kann jedoch ein derartiger Reflektor, der auch in der Kleidung eines Darstellers eingearbeitet sein kann, von Vorteil sein. In derartigen Fällen ist das über den Reflektor erhaltene Signal klarer und stärker als Signale von gegebenenfalls irrtümlich angemessenen Hindernissen. Deren Signale lassen sich dann ohne Schwierigkeiten ausfiltern.

Auch bei dieser Ausführungsform ist ein vollständig selbsttätiges Verfolgen des Motivs hinsichtlich der einzuhaltenden Schärfe gewährleistet, da das erhaltene Signal ausschließlich von der Entfernung des Reflektors oder Senders am Motiv abhängt.

Im einzelnen kann die Erfindung dadurch weitergebildet werden, daß der Entfernungsmesser über ein Kabel mit der Steuerung verbunden ist, wobei alternativ hierzu der Entfernungsmesser mit einem Sender für die Datenübertragung versehen ist und die Steuerung einen entsprechenden Empfänger aufweist.

Im einzelnen ist es vorteilhaft, daß die Servomotoren mit einer üblichen Computerschnittstelle versehen sind, beispielsweise mit einer RS 232- oder RS 448-Schnittstelle.

Bevorzugt enthält die Steuerung ferner einen Geber zur Erfassung der Ist-Stellung des oder der Servomotoren.

Im einzelnen ist es von Vorteil, daß der am Motiv angeordnete Reflektor als Rundumprisma ausgebildet ist, was den Vorteil bildet, daß der Reflektor bei Drehungen des Motivs voll funktionsfähig bleibt.

Im einzelnen läßt sich die Erfindung dadurch weiterbilden, daß die Filmkamera einen horizontalen und vertikalen Schwenkantrieb aufweist, und daß die Steuerung derart ausgebildet ist, daß mehrere Entfernungsmesser an verschiedenen Punkten gegenüber der zu filmenden Szene vorgesehen sind und aufgrund der von den Entfernungsmessern erhaltenen Signale das Motiv mittenbetont verfolgt wird. Beispielsweise läßt sich bei der Planung einer zu filmenden Szene mittels entsprechend angeordneter Entfernungsmesser ein räumliches Gitter erzeugen, innerhalb dessen die Kamera selbsttätig das Hauptmotiv verfolgt und gleichzeitig Schärfe und Brennweite jeweils optimal hält.

Im folgenden wird die Erfindung anhand einer in den Zeichnungen beispielhaft veranschaulichten Ausführungsform näher erläutert.

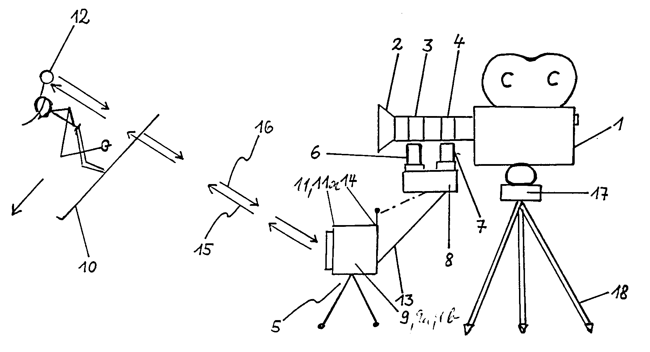

Die Zeichnung zeigt eine schematische Darstellung der Filmkamera nach der Erfindung nebst dem Entfernungsmesser sowie einem ebenfalls als Beispiel dienenden, sich bewegenden Motiv.

Wie in der Zeichnung gezeigt, weist die Filmkamera 1 ein Objektiv 2 auf, welches zur Einstellung der Schärfe bzw. Brennweite einen Schärfering 3 und einen Zoomring 4 aufweist. Ein Entfernungsmesser für die Kamera 1 ist allgemein mit 5 bezeichnet.

Der Schärfering 3 und der Zoomring 4 sind je mit einem Servomotor 6 bzw. 7 gekuppelt. Die Servomotoren werden durch eine Steuerung 8 gesteuert.

Der Entfernungsmesser 5 ist bei der ersten Ausführungsform als Infrarotentfernungsmesser 9 und bei der zweiten, ebenfalls in der Zeichnung dargestellten Ausführungsform als Laserentfernungsmesser 9a ausgebildet, wobei dessen die Entfernung zwischen der Filmkamera 1 und dem sich bewegenden Motiv 10 repräsentierenden Daten in der Steuerung 8 mittels einer entsprechenden Software zur Betätigung der Servomotoren 6 und 7 verarbeitet werden, und zwar in einer Weise, daß die optimale Schärfe des Motivs 10 auch bei Änderungen der über den Zoomring 4 verstellten Brennweite aufrechterhalten bleibt.

Bei dem bevorzugten Ausführungsbeispiel ist der Entfernungsmesser 9 bzw. 9a als Servo-Theodolit ausgebildet, wobei am Motiv 10 ein oder mehrere Reflektoren 12 angeordnet sind. Anstelle der Reflektoren 12 lassen sich auch entsprechende Sender verwenden.

Der Servo-Theodolit, bei dem es sich beispielsweise um einen Servo-Theodoliten der Firma Topcon, USA, handeln kann, ist mit einem Kabel 13 mit der Steuerung 8 verbunden.

Anstelle des Kabels 13 kann der Servo-Theodolit 11, wie zusätzlich in der Zeichnung gezeigt, mit einem Sender 14 versehen sein, wobei die Steuerung 8 einen entsprechenden Empfänger enthält, so daß die Datenübertragung per Funk und drahtlos erfolgen kann.

Wie gezeigt, ist an dem sich bewegenden Motiv 10, welches im Ausführungsbeispiel einen Skiläufer repräsentiert, der für derartige Fälle bevorzugt als Rundumprisma ausgebildete Reflektor 12 befestigt, welcher die von dem Servo-Theodoliten 11 ausgesandten Infrarot- bzw. Lasersignale, die durch die Pfeile 15 in der Zeichnung symbolisiert sind, reflektiert und die reflektierten Signale, die durch die Pfeile 16 in der Zeichnung symbolisiert sind, werden in dem Servo-Theodoliten 11 hinsichtlich der auftretenden Zeitdifferenz verarbeitet, so daß ein durch die Steuerung 8 verwertbares Entfernungssignal erzeugt wird.

Bei der dritten, ebenfalls in der Zeichnung dargestellten Ausführungsform ist der Entfernungsmesser 5 als Radarentfernungsmesser 9b ausgebildet, dessen die Entfernung zwischen der Filmkamera 1 und dem sich bewegenden Motiv 10 repräsentierenden Daten ebenfalls in der Steuerung 8 mittels einer entsprechenden Software zur Betätigung der Servomotoren 6 und 7 verarbeitet werden, derart, daß die optimale Schärfe des Motivs 10 auch bei Änderungen der über den Zoomring 4 verstellten Brennweite aufrechterhalten bleibt.

Der Radarentfernungsmesser enthält ein Millimeterwellen-Radar, welches beispielsweise in dem Bereich von 35 Ghz, 77 Ghz oder 99 Ghz arbeitet.

Bei dem bevorzugten Ausführungsbeispiel enthält der Entfernungsmesser 9 ein Frequenzmoduliertes-Continuous-Wave-Radar (FMCW-Radar) 11a wobei am Motiv 10 aus oben erläuterten Gründen ein oder mehrere Reflektoren 12 angeordnet sein können. Anstelle der Reflektoren 12 lassen sich auch entsprechende Sender verwenden.

Der das FMCW-Radar enthaltende Entfernungsmesser 11a ist mit dem Kabel 13 mit der Steuerung 8 verbunden.

Anstelle des Kabels 13 kann auch bei dieser Ausführungsform der Radarentfernungsmesser 11a, wie zusätzlich in der Zeichnung gezeigt, mit dem Sender 14 versehen sind, wobei die Steuerung 8 einen entsprechenden Empfänger enthält, so daß die Datenübertragung per Funk und drahtlos erfolgen kann.

Obwohl, wie oben erwähnt, durch das FMCW-Radar die Inhomogenität des Raumes gemessen wird, ist, wie gezeigt, an dem sich bewegenden Motiv 10, welches im Ausführungsbeispiel einen Skiläufer repräsentiert, zusätzlich der für derartige Fälle bevorzugt ein als Rundumprisma ausgebildeter Reflektor befestigt, welcher die von dem Radarentfernungsmesser 11 ausgesandten Radar-Signale (Pfeile 15) reflektiert und die reflektierenden Signale (Pfeile 16) werden in dem Entfernungsmesser 11a entsprechend verarbeitet, so daß ein durch die Steuerung 8 verwertbares Entfernungssignal erzeugt wird.

Bevorzugt enthält die Steuerung 8 einen Geber zur Erfassung der Ist-Stellung der Servomotoren 6 und 7, was einerseits die Signalverarbeitung erleichtert und andererseits für die Ausgangsstellung des Motivs 10 die Möglichkeit einer Eichung für spezielle Szenen bietet.

Wie ferner in der Zeichnung gezeigt, kann die Filmkamera 1 zusätzlich einen horizontalen Schwenkantrieb 17 aufweisen, welcher ebenfalls mit der Steuerung 8 gekoppelt ist und ein horizontales und vertikales Schwenken der Filmkamera 1 gegenüber dem Stativ 18 mit motorischem Antrieb ermöglicht. Hierdurch ist es möglich, daß durch von mehreren Servo-Theodoliten bzw. Radarentfernungsmesser gewonnene Signale zusätzlich für einen automatischen Betrieb der Filmkamera zu nutzen, indem über die Steuerung 8 der Schwenkantrieb 17 derart getrieben wird, daß das Motiv mittenbetont verfolgt wird. Zu diesem Zwecke läßt sich beispielsweise mit einer entsprechenden Anzahl von Servo-Theodoliten bzw. Radarentfernungsmessern an verschiedenen Stellen gegenüber der zu filmenden Umgebung ein räumliches Gitter erzeugen.

Sämtliche aus der Beschreibung, den Ansprüchen und der Zeichnung hervorgehenden Merkmale und Vorteile der Erfindung, einschließlich konstruktiver Einzelheiten und räumlicher Anordnungen, können sowohl für sich selbst als auch in beliebiger Kombination erfindungswesentlich sein.

## Patentansprüche

1. Filmkamera mit einem Objektiv, welches zur Einstellung der Schärfe bzw. der Brennweite einen Schärfering bzw. einen Zoomring aufweist, bei welcher ferner ein Entfernungsmesser vorgesehen ist, **dadurch gekennzeichnet**, daß der Schärfering (3) und der Zoomring (4) mit je einem Servomotor (6, 7) gekoppelt ist, daß für die Servomotoren (6, 7) eine Steuerung (8) vorgesehen ist, und daß der Entfernungsmesser (5) derart ausgebildet ist, daß er der gemessenen Entfernung zu einem Motiv (10) entsprechende Daten erzeugt, welche in der Steuerung (8) zur entsprechenden Betätigung der Servomotoren (6, 7) verarbeitet werden, derart, daß die optimale Schärfe bei einem sich bewegenden Motiv (10) aufrechterhalten bleibt.

2. Filmkamera nach Anspruch 1, **dadurch gekennzeichnet**, daß der Entfernungsmesser (5) als Infrarotentfernungsmesser (9) ausgebildet ist.

3. Filmkamera nach Anspruch 1, **dadurch gekennzeichnet**, daß der Entfernungsmesser (5) als Laser-Entfernungsmesser (9a) ausgebildet ist.

4. Filmkamera nach einem der Ansprüche 1 bis 3, **dadurch gekennzeichnet**, daß der Entfernungsmesser (9, 9a) als Servo-Theodolit (11) ausgebildet ist.

5. Filmkamera nach Anspruch 3 oder 4**, dadurch gekennzeichnet**, daß der Laser-Entfernungsmesser (9, 11) einen gepulsten Laser der Klasse 1 enthält.

6. Filmkamera nach Anspruch 1, **dadurch gekennzeichnet**, daß der Entfernungsmesser (5) als Radar-Entfernungsmesser (9b) ausgebildet ist.

7. Filmkamera nach Anspruch 6, **dadurch gekennzeichnet**, daß der Radar-Entfernungsmesser (9b) als Millimeterwellen-Radar ausgebildet ist.

8. Filmkamera nach Anspruch 4, 6 oder 7, **dadurch gekennzeich**net, daß der Radar-Entfernungsmesser (9b) als Frequenzmoduliertes-Continuous-Wave-Radar (11a) ausgebildet ist.

9. Filmkamera nach einem der Ansprüche 1 bis 8, **dadurch gekennzeichnet**, daß am Motiv (10) ein oder mehrere Reflektoren (12), insbesondere ein Rundumprisma und/oder Sender angeordnet sind.

10. Filmkamera nach einem der vorstehenden Ansprüche, **dadurch gekennzeichnet**, daß der Entfernungsmesser (9, 9a, 9b, 11, 11a) über ein Kabel (13) mit der Steuerung (8) verbunden ist.

11. Filmkamera nach einem der Ansprüche 1 bis 9, **dadurch gekennzeichnet**, daß für die Datenübertragung der Entfernungsmesser (9, 9a, 11, 11a) mit einem Sender (14) versehen ist, und daß die Steuerung (8) einen entsprechenden Empfänger aufweist.

12. Filmkamera nach einem der vorstehenden Ansprüche, **dadurch gekennzeichnet**, daß die Servomotoren (6, 7) mit einer Computerschnittstelle versehen sind und daß die Steuerung (8) Geber zur Erfassung der Ist-Stellung des oder der Servomotoren (6, 7) enthält.

13. Filmkamera nach einem der vorstehenden Ansprüche, **dadurch gekennzeichnet**, daß die Filmkamera (1) einen horizontalen und vertikalen Schwenkantrieb (17) aufweist, und daß die Steuerung (8) derart ausgebildet ist, daß aufgrund der vom Entfernungsmesser (9, 11) erhaltenen Signale das Motiv (10) mittenbetont verfolgt wird.
